# EUROPEAN PATENT APPLICATION

(11) **EP 4 561 252 A1**
(43) Date of publication of application: **28.05.2025**
(21) Application number: 23842844.5
(22) Date of filing: 07.07.2023
(51) Int. Cl.: H04W 76/14, H04W 84/12, H04W 92/18

(54) **IMAGE FORMATION DEVICE**

(30) Priority: 22.07.2022 JP 2022117402
(71) Applicant: CANON KABUSHIKI KAISHA, Tokyo 146-8501 (JP)
(72) Inventor: KANAMOTO Yoshiji, Tokyo 146-8501 (JP)
(74) Representative: Canon Europe Limited
(86) International application number: PCT/JP2023/025213
(87) International publication number: WO 2024/018919

(57) **Abstract**

An image forming apparatus includes receiving means for receiving a first trigger frame including information regarding orthogonal frequency division multiple access (OFDMA) compliant with an Institute of Electrical and Electronics Engineers (IEEE) 802.11 standard, from an external access point provided on an outside of the image forming apparatus, while the first mode is enabled, communication means for executing communication processing in the first mode by the OFDMA compliant with the IEEE802.11 standard, based on the information regarding the first trigger frame, and control means for controlling the image forming apparatus in such a manner that the OFDMA compliant with the IEEE802.11 standard is not executed in wireless communication of the second mode, based on the second mode being enabled, even in a case where the OFDMA compliant with the IEEE802.11 standard is enabled in the first mode.

## Description

### Technical Field

The present invention relates to an image forming apparatus.

### Background Art

Japanese Patent Application Laid-Open No. 2012-19487 discusses a technique that enables an image forming apparatus to concurrently execute wireless communication in an infrastructure mode via an access point, and wireless communication in an ad hoc mode.

### Citation List

### Patent Literature

PTL 1: Japanese Patent Laid-Open No. 2012-19487

### Summary of Invention

### Technical Problem

In recent years, wireless communication has been used in various cases, and the provision of wireless communication with high convenience has been demanded. Solution to Problem

To solve the above-described problem, an image forming apparatus includes first setting means for enabling a first mode in which wireless communication is executed via an external access point provided on an outside of the image forming apparatus, second setting means for enabling a second mode in which wireless communication is executed not via an external access point provided on the outside of the image forming apparatus, receiving means for receiving a first trigger frame including information regarding orthogonal frequency division multiple access (OFDMA) compliant with an Institute of Electrical and Electronics Engineers (IEEE) 802.11 standard, from an external access point provided on the outside of the image forming apparatus, while the first mode is enabled, communication means for executing communication processing in the first mode by the OFDMA compliant with the IEEE802.11 standard, based on the information regarding the first trigger frame, control means for controlling the image forming apparatus in such a manner that the OFDMA compliant with the IEEE802.11 standard is not executed in wireless communication of the second mode, based on the second mode being enabled, even in a case where the OFDMA compliant with the IEEE802.11 standard is enabled in the first mode, and print processing means for executing print processing on a sheet based on a print job received by wireless communication via the first mode or wireless communication via the second mode.

### Advantageous Effects of Invention

According to the present invention, it becomes possible to provide wireless communication with high convenience.

### Brief Description of Drawings

[Fig. 1] Fig. 1 is a diagram illustrating an example of a system configuration according to the present exemplary embodiment.
[Fig. 2A] Fig. 2A is a diagram illustrating an example of a hardware configuration of a mobile terminal.
[Fig. 2B] Fig. 2B is a diagram illustrating an example of a hardware configuration of an image forming apparatus.
[Fig. 3] Fig. 3 is a diagram illustrating an example of a functional configuration of an access point.
[Fig. 4] Fig. 4 is a diagram illustrating an example of communication processing.
[Fig. 5] Fig. 5 is a diagram illustrating an example of a frame configuration.
[Fig. 6] Fig. 6 is a diagram illustrating an example of a frame configuration.
[Fig. 7] Fig. 7 is a diagram illustrating an example of a configuration of a subchannel.
[Fig. 8] Fig. 8 is a diagram illustrating an example of communication processing.
[Fig. 9A] Fig. 9A is a diagram illustrating an example of an operation screen.
[Fig. 9B] Fig. 9B is a diagram illustrating an example of an operation screen.
[Fig. 9C] Fig. 9C is a diagram illustrating an example of an operation screen.
[Fig. 9D] Fig. 9D is a diagram illustrating an example of an operation screen.
[Fig. 10] Fig. 10 is a diagram illustrating a flowchart related to processing of an image forming apparatus.
[Fig. 11] Fig. 11 is a diagram illustrating a flowchart related to processing of an image forming apparatus.

### Description of Embodiments

Hereinafter, exemplary embodiments of the present invention will be described in detail with reference to the drawings. In addition, the present exemplary embodiment is merely an example, and it should be noted that specific examples of components, processing steps, and display screens are not intended to limit the scope of the present invention to these unless otherwise stated.

### [First Exemplary Embodiment]

### (System Configuration)

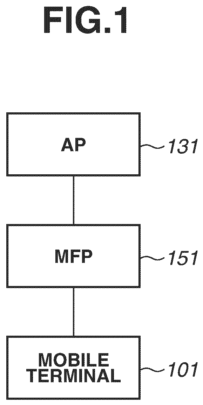

Fig. 1 illustrates a configuration example of a system according to the present exemplary embodiment. In an example, this system is a wireless communication system in which a plurality of communication apparatuses can wirelessly communicate with each other. In the example illustrated in Fig. 1, the system includes an access point 131, a multi function peripheral (MFP) 151, and a mobile terminal 101. In addition, an example of the mobile terminal 101 is a laptop personal computer or a smartphone.

The MFP 151 has a print function, a reading function (scanner), a FAX function, and the like. Further, the MFP 151 according to the present exemplary embodiment has a communication function of enabling wireless communication with the mobile terminal 101. In the present exemplary embodiment, a case where the MFP 151 is used as an example will be described, but an apparatus is not limited to this. For example, in place of the MFP 151, a facsimile apparatus, a scanner, a projector, or a single function printing apparatus may be used. The MFP stands for a multi function peripheral. In the present exemplary embodiment, an apparatus having the print function may be referred to as an image forming apparatus in some cases.

The access point 131 is provided separately from (on the outside of) the mobile terminal 101 and the MFP 151, and operates as a base station apparatus of a wireless local area network (WLAN). In addition, the access point 131 will be sometimes described as an external access point 131 or an external wireless base station (or external master station). The MFP 151 having a communication function of the WLAN can perform communication in an infrastructure mode of the WLAN via the access point 131. In addition, hereinafter, an access point will be sometimes referred to as an "AP". Further, the infrastructure mode will be sometimes referred to as a "wireless infrastructure mode" or an "infrastructure mode".

The infrastructure mode is a mode in which the MFP 151 communicates with a different apparatus via an external apparatus (for example, the AP 131) that forms a network. Connection with an external AP that is established by the MFP 151 operating in the infrastructure mode will be referred to as infrastructure connection (hereinafter, infrastructure connection). In the infrastructure connection in the present exemplary embodiment, the MFP 151 operates as a slave station and the external AP 131 operates as a master station. In the present exemplary embodiment, the master station is an apparatus that forms a network and determines a communication channel to be used in the network. Further, the slave station is an apparatus that does not determine a communication channel to be used in a network to which the slave station belongs, and executes wireless communication in a communication channel determined by the master station.

The AP 131 performs wireless communication with a communication apparatus (authenticated) permitted to connect to the AP 131, and relays wireless communication between the communication apparatus and a different communication apparatus. Further, the AP 131 is connected to a wired communication network, for example, and can relay communication executed between a communication apparatus connected to the wired communication network and a different communication apparatus wirelessly connecting to the access point 131.

Using WLAN communication functions included in the mobile terminal 101 and the MFP 151, the mobile terminal 101 and the MFP 151 can perform wireless communication in the wireless infrastructure mode via the external AP 131 or in a peer-to-peer mode not involving the external AP 131. Hereinafter, peer to peer will be referred to as "P2P". Alternatively, communication executed without involving the external AP 131 will be sometimes referred to as direct wireless communication. The P2P mode includes Wi-Fi Direct (registered trademark) and a software AP mode. Hereinafter, Wi-Fi Direct (registered trademark) will be sometimes referred to as WFD. The P2P mode can also be said to be communication compliant with an Institute of Electrical and Electronics Engineers (IEEE) 802.11 series standard.

The P2P mode refers to a mode in which the MFP 151 directly communicates with a different apparatus such as the mobile terminal 101 without involving an external apparatus that forms a network. In the present exemplary embodiment, the P2P mode includes an AP mode in which the MFP 151 operates as an AP. AP connection information (service set identifier (SSID) or password) to be enabled within the MFP 151 when the MFP 151 operates in the AP mode can be arbitrarily set by a user. The P2P mode may include a WFD mode for the MFP 151 performing communication by Wi-Fi Direct (WFD), for example. A device that is to operate as a master station is determined from among a plurality of WFD supporting devices in accordance with a sequence called Group Owner Negotiation, for example. Alternatively, the master station may be determined without the Group Owner Negotiation being executed. In particular, an apparatus that is a WFD supporting device and plays a role as a master station will be referred to as a Group Owner (GO). Direct connection with a different apparatus that is established by the MFP 151 operating in the P2P mode will be referred to as direct connection. In the direct connection in the present exemplary embodiment, the MFP 151 operates as a master station and the different apparatus (mobile terminal 101, etc.) operates as a slave station.

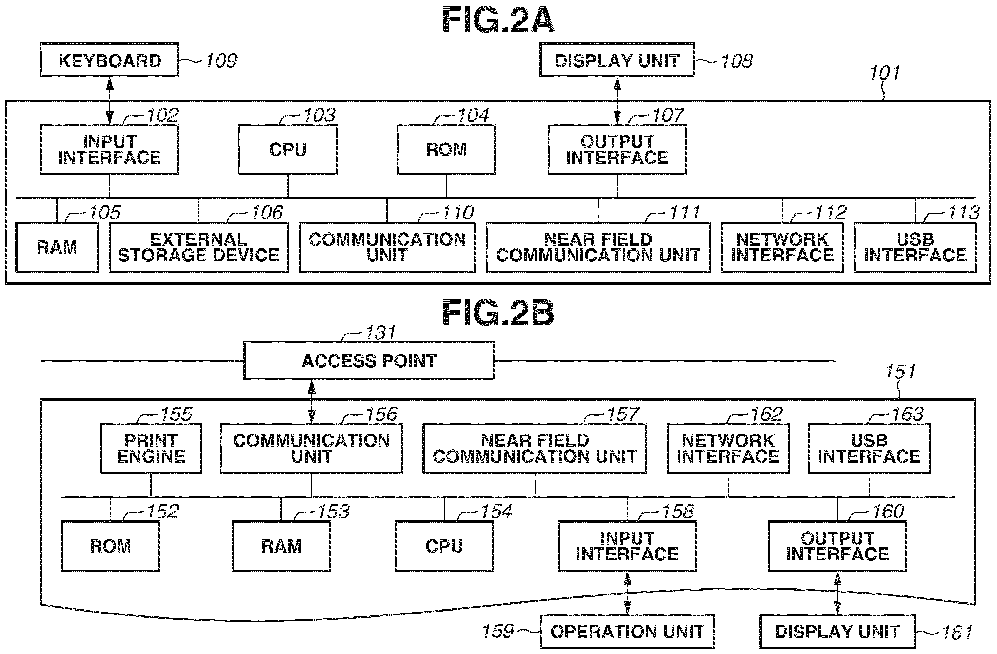

Next, configurations of a mobile terminal according to the present exemplary embodiment, and a communication apparatus that can communicate with the mobile terminal according to the present exemplary embodiment will be described with reference to Figs. 2A and 2B. In the present exemplary embodiment, the description will be given using the following configuration as an example, but functions are not specifically limited to the functions illustrated in Figs. 2A and 2B because the present exemplary embodiment can be applied to an apparatus that can perform communication with a communication apparatus.

The mobile terminal 101 includes an input interface 102, a central processing unit (CPU) 103, a read-only memory (ROM) 104, a random access memory (RAM) 105, an external storage device 106, an output interface 107, a display unit 108, a keyboard 109, a communication unit 110, a near field communication unit 111, a network interface 112, and a universal serial bus (USB) interface 113. A computer of the mobile terminal 101 is formed by the CPU 103, the ROM 104, and the RAM 105.

The input interface 102 is an interface for receiving data input and operation instructions from the user by an operation unit such as the keyboard 109 being operated. The operation unit may be a physical keyboard or a physical button, or may be a software keyboard or a software button that is displayed on the display unit 108. In other words, the input interface 102 may receive input (operation) from the user via the display unit 108.

The CPU 103 is a system control unit and controls the entire mobile terminal 101. The ROM 104 stores fixed data such as control programs to be executed by the CPU 103, data tables, and an embedded operating system (hereinafter, will be referred to as "OS") program. In the present exemplary embodiment, each control program stored in the ROM 104 performs software execution control such as scheduling, task switch, or interrupt processing under the control of an embedded OS stored in the ROM 104.

The RAM 105 includes a static random access memory (SRAM) requiring a backup power source. Because data is held in the RAM 105 by a primary battery for data backup (not illustrated), the RAM 105 can store important data such as program control variables without volatilizing the data. The RAM 105 is also provided with a memory area for storing setting information of the mobile terminal 101 and management data of the mobile terminal 101. The RAM 105 is also used as a main memory and a work memory of the CPU 103.

The external storage device 106 stores a print information generation program for generating print information interpretable by a printing apparatus 115, for example. The output interface 107 is an interface that performs control for the display unit 108 performing data display and notification of a state of the mobile terminal 101.

The display unit 108 includes a light emitting diode (LED) and a liquid crystal display (LCD), and performs data display and notification of a state of the mobile terminal 101. The communication unit 110 is a component for connecting with an apparatus such as the MFP 151 and the access point (AP) 131, and executing data communication. For example, the communication unit 110 can connect to an internal AP (not illustrated) in the MFP 151. By the communication unit 110 and the internal AP in the MFP 151 connecting with each other, the mobile terminal 101 and the MFP 151 become able to perform P2P communication. The communication unit 110 may directly communicate with the MFP 151 via wireless communication, or may communicate with the MFP 151 via an external apparatus such as the AP 131 that exists on the outside of the mobile terminal 101 and the MFP 151. The external apparatus includes an external AP (AP 131, etc.) existing on the outside of the mobile terminal 101 and on the outside of the MFP 151, and an apparatus other than an AP that can relay communication. In the present exemplary embodiment, a wireless communication method to be used by the communication unit 110 is assumed to be Wireless Fidelity (Wi-Fi) (registered trademark), which is a communication standard compliant with an IEEE 802.11 series standard. Examples of the AP 131 include devices such as a wireless LAN router.

The near field communication unit 111 is a component for wirelessly connecting with an apparatus such as the MFP 151 at a short distance and executing data communication, and performs communication using a communication method different from that of the communication unit 110. The near field communication unit 111 can connect with a near field communication unit 157 in the MFP 151, for example. Examples of communication methods include Near Field Communication (NFC), Bluetooth (registered trademark) Classic, Bluetooth Low Energy (BLE), and Wi-Fi Aware.

The network interface 112 is a connection interface (I/F) that controls wireless communication and communication processing executed via a wired LAN cable.

The USB interface 113 is a connection I/F that controls USB connection established via a USB cable. Specifically, the USB interface 113 is an interface for connecting with an apparatus such as the MFP 151 and the external AP 131 via a USB, and executing data communication.

Next, the MFP 151 will be described. The MFP 151 includes a ROM 152, a RAM 153, a CPU 154, a print engine 155, a communication unit 156, the near field communication unit 157, an input interface 158, an operation unit 159, an output interface 160, a display unit 161, a network interface 162, and a USB interface 163. A computer of the MFP 151 is formed by the ROM 152, the RAM 153, and the CPU 154.

The communication unit 156 controls communication processing executed via each interface. For example, the MFP 151 can operate in an infrastructure mode and a peer to peer (P2P) mode as modes for performing communication using the communication unit 156.

Specifically, the communication unit 156 can operate as an internal AP in the MFP 151. For example, by the user issuing an instruction to activate the internal AP, the MFP 151 operates as an AP. In the present exemplary embodiment, a wireless communication method to be used by the communication unit 156 is assumed to be a communication standard compliant with an IEEE 802.11 series standard. In the following description, Wi-Fi (registered trademark) (Wi-Fi communication) is a communication standard compliant with an IEEE 802.11 series standard. The communication unit 156 may include hardware functioning as an AP, or may operate as an AP (operate in the software AP mode) by software for causing the communication unit 156 to function as an AP. In a case where the communication unit 156 operates as a master station, the communication unit 156 can concurrently maintain P2P wireless connection with a predetermined number or less (for example, third or less) of slave station apparatuses. The communication unit 156 can execute wireless communication using a frequency band selected from among 2.4 gigahertz (GHz), 5 GHz, and 6 GHz.

The near field communication unit 157 is a component for connecting wirelessly with an apparatus such as the mobile terminal 101 at a short distance, and can connect with the near field communication unit 111 in the mobile terminal 101, for example. Examples of communication methods include NFC, Bluetooth Classic, BLE, and Wi-Fi Aware.

The RAM 153 includes an SRAM requiring a backup power source. Because data is held in the RAM 153 by a primary battery for data backup (not illustrated), the RAM 153 can store important data such as program control variables without volatilizing the data. The RAM 153 is also provided with a memory area for storing setting information of the MFP 151 and management data of the MFP 151. The RAM 153 is also used as a main memory and a work memory of the CPU 154, and stores a receive buffer for temporarily storing print information received from the mobile terminal 101, and various types of information.

The ROM 152 stores fixed data such as control programs to be executed by the CPU 154, data tables, and an OS program. In the present exemplary embodiment, each control program stored in the ROM 152 performs software execution control such as scheduling, task switch, or interrupt processing under the control of an embedded OS stored in the ROM 152.

The CPU 154 is a system control unit and controls the entire MFP 151.

Based on information stored in the RAM 153 or a print job received from the mobile terminal 101, the print engine 155 executes print processing of forming an image onto a recording medium such as a sheet by adding recording material such as ink to the recording medium, and outputs a printed result. Because a print job to be transmitted from the mobile terminal 101 generally has a large data amount, a communication method that enables high-speed communication is required to be used in the communication of the print job. The MFP 151 therefore receives the print job via the communication unit 156 that can perform communication at higher speed than the near field communication unit 157. The printing executed using ink is an example, and printing may be executed using an electrophotographic method that uses toner. In addition, a cartridge type MFP to which an ink cartridge is attached, or an MFP including an ink tank to be supplied with ink from an ink bottle may be used.

A memory such as an external hard disk drive (HDD) or a secure digital (SD) card may be attached to the MFP 151 as an optional device, and information stored in the MFP 151 may be stored in the memory.

The input interface 158 is an interface for receiving data input and operation instructions from the user by the operation unit 159 such as a physical button being operated. The operation unit may be a software keyboard or a software button that is displayed on the display unit 161. In other words, the input interface 158 may receive input from the user via the display unit 161.

The output interface 160 is an interface that performs control for the display unit 161 performing data display and notification of a state of the MFP 151.

The display unit 161 includes an LED and an LCD, and performs data display and notification of a state of the MFP 151.

The USB interface 163 is an interface that controls USB connection established via a USB cable. Specifically, the USB interface 163 is an interface for connecting with an apparatus such as the MFP 151 and an external AP via a USB, and executing data communication.

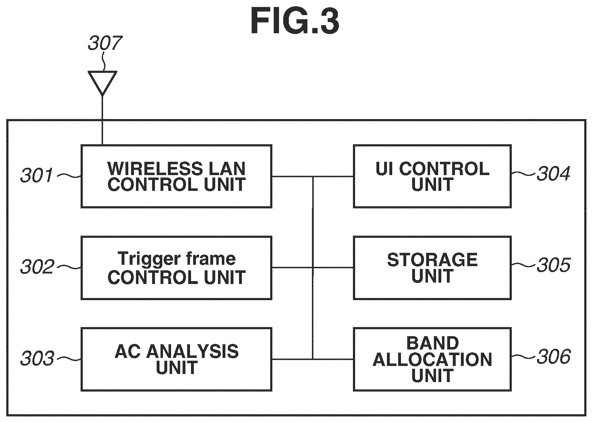

Fig. 3 is a block diagram illustrating a functional configuration example of the AP 131. The AP 131 includes, as its functional configurations, for example, a wireless LAN control unit 301, a Trigger frame control unit 302, a received frame analysis unit 303, a user interface (UI) control unit 304, a storage unit 305, and a band allocation unit 306.

The wireless LAN control unit 301 executes control for performing transmission and reception of radio signals with a different wireless LAN communication apparatus. The wireless LAN control unit 301 can be implemented by a program for controlling a baseband circuit for a wireless LAN, a radio frequency (RF) circuit, and an antenna, for example. The wireless LAN control unit 301 executes communication control of the wireless LAN in accordance with an IEEE 802.11 series standard, and executes wireless communication with a station (STA) (equivalent to a slave station) compliant with the IEEE 802.11 series standard.

The Trigger frame control unit 302 performs control for transmitting a Trigger frame to an authenticated STA via the wireless LAN control unit 301. If the STA receives the Trigger frame, the STA transmits an uplink (UL) frame as a response to the Trigger frame. If the AP 131 receives the UL frame via the wireless LAN control unit 301, the AP 131 interprets the received UL frame in the received frame analysis unit 303. For example, in a case where the received UL frame includes information regarding an access category (AC), the received frame analysis unit 303 acquires the information regarding the AC by analysis, and identifies an AC of data to be transmitted by a transmission source STA of the UL frame. The "AC" stands for an access category.

Based on information acquired by the received frame analysis unit 303, the band allocation unit 306 determines the width of a frequency band to be allocated for data transmission from each STA, a central frequency of the frequency band, and a time at which the frequency band is allocated. In other words, the band allocation unit 306 determines a frequency range of a radio resource to be allocated to each STA, and a timing at which a radio resource is allocated to each STA. The Trigger frame control unit 302 notifies each STA of information indicating the allocation determined by the band allocation unit 306, via a Trigger frame, and causes an UL frame to be transmitted in accordance with the allocation.

The UI control unit 304 is implemented by a program for controlling user-interface-related hardware (not illustrated) of the AP 131 such as a touch panel or a button for receiving a user operation on the AP 131. The UI control unit 304 can also have a function for presenting information to the user, such as image display or voice output, for example. The storage unit 305 has a storage function that can be implemented by a ROM and a RAM storing programs and data for operating the AP 131.

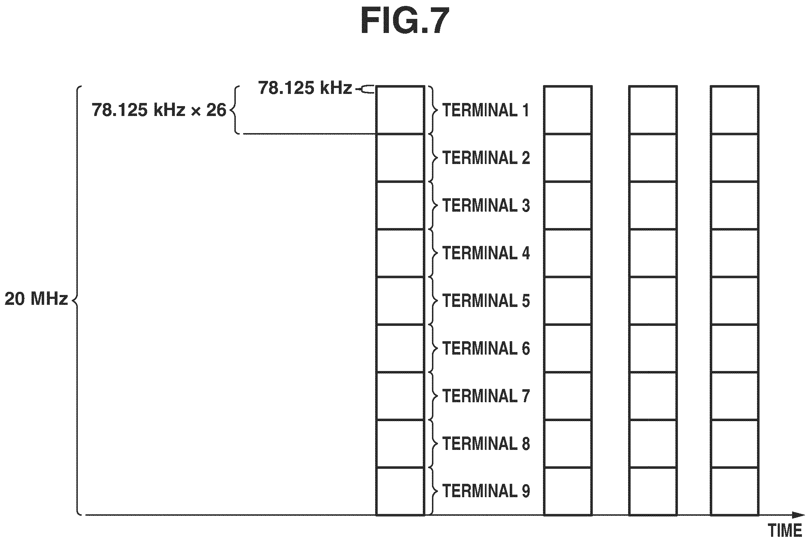

Fig. 7 is a diagram illustrating a configuration of a subcarrier. In the IEEE 801.11ax, by making a frequency band smaller than 20 megahertz (MHz) allocatable to an STA, a number of STAs become able to concurrently use radio resources. Such radio resource allocation is performed using orthogonal frequency division multiple access (OFDMA). In the IEEE802.11ax, for example, a 20-MHz bandwidth is divided into nine blocks including 26 subcarriers (tones) not overlapping each other on a frequency axis, and a radio resource is allocated to a terminal on a block basis. The allocation unit block is called a resource unit (RU), and the size of the RU is defined in accordance with a frequency bandwidth and the number of terminals to which radio resources are allocated. The size of the RU is represented by the number of tones. For example, 26, 52, 106, 242, 484, 996, and 2 × 996 can be used. In the 20-MHz bandwidth, values equal to or smaller than 242 can be used from among these values. In a case where the entire 20-MHz bandwidth is allocated to one terminal, up to 242 tones can be allocated.

On the other hand, for example, in a case where nine terminals concurrently use the 20-MHz bandwidth, 26 tones are allocated to each terminal. In this manner, by dividing a frequency band into blocks each including 26 tones, which is the minimum allocation unit, nine terminals can concurrently perform communication using the 20-MHz bandwidth. Similarly, in a case where 40-MHz, 80-MHz, and-160 MHz frequency bandwidths are used, up to 18, 37, and 74 terminals can concurrently perform communication, respectively.

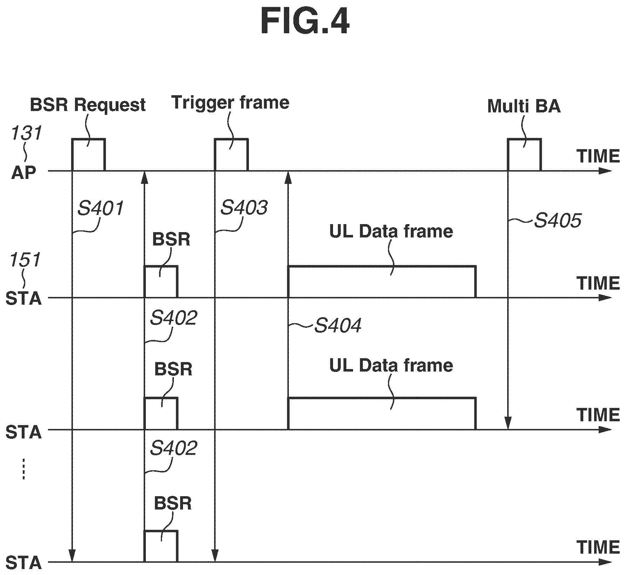

Next, a basic flow of UL multiuser (MU) communication will be initially described with reference to Fig. 4. First of all, in S401, the AP 131 transmits a Buffer Status Report Request (BSR Request) using the Trigger frame control unit 302. In the present exemplary embodiment, the AP 131, the MFP 151, and the mobile terminal 101 can execute communication that is based on the IEEE 801.11ax. In the present exemplary embodiment, the mobile terminal 101 does not belong to a network formed by the AP 131.

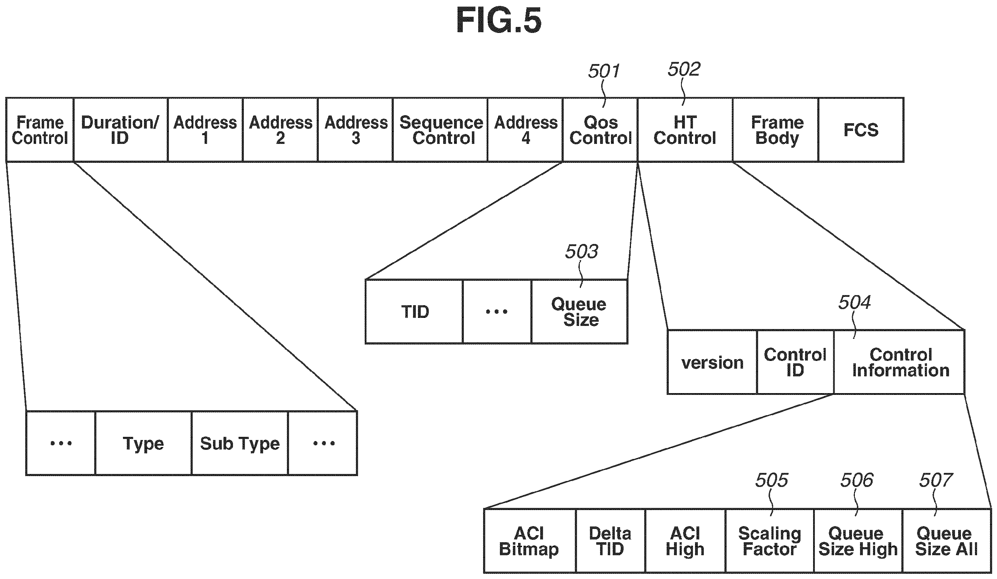

Referring back to Fig. 4, in S402, each STA transmits a Buffer status report (BSR). The BSR is used when each STA notifies an AP of a transmission buffer amount of itself. Fig. 5 illustrates a configuration example of a BSR frame. A transmission buffer amount of each STA is indicated by a Queue size subfield 503 included in a QoS Control field 501. Alternatively, a transmission buffer amount of each STA can be indicated by a Scaling Factor subfield 505, a Queue Size High subfield 506, and a Queue Size All subfield 507 in a Control Information subfield 504 of an HT Control field 502.

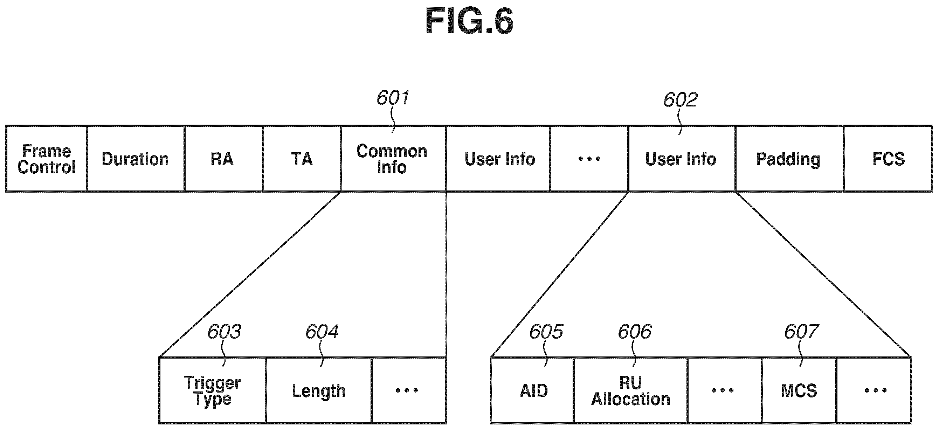

When the AP 131 receives a BSR from each STA, in S403, the AP 131 transmits a Trigger frame for promoting each STA to transmit UL data, based on the received information. At this time, based on information regarding a transmission buffer amount that is included in the BSR frame, the AP 131 determines RU allocation in UL-OFDMA and a communication time common to all STAs. After that, the AP 131 transmits a Trigger frame including information (hereinafter, RU/communication time information) regarding an RU and a data communication time common to all STAs. That is, the AP 131 transmits a Trigger frame including information regarding OFDMA. Fig. 6 illustrates a configuration of a Trigger frame.

A Common Info field 601 includes information common to all STAs. A data communication time common to all STAs is set in a Length subfield 604 in the Common Info field 601. In a case where a Trigger Type subfield 603 indicates 0, a User Info field 602 is added. The Common Info field 601 includes another type of information. For example, carrier sense (CS) Required is included in the Common Info field 601, and information indicating whether or not to execute carrier sense is stored. In a case where information indicating that carrier sense is required to be executed is included, an STA that has received a Trigger frame executes carrier sense. On the other hand, in a case where information indicating that carrier sense is not required to be executed is included, an STA that has received a Trigger frame does not execute carrier sense. An STA is identified based on an AID subfield 605 of the User Info field 602. An RU (unit for combining a plurality of subcarriers) to be allocated to a corresponding STA, and a tone size are identified by an index value indicated by an RU Allocation subfield 606. The tone size is a value indicating the width of a frequency band allocatable to each STA. A modulation and coding scheme (MCS) is designated in an MCS subfield 607.

An AP reserves a communication channel for transmitting a Trigger frame. Then, the AP divides the reserved communication channel into a plurality of resource units, and allocates each resource unit to a terminal.

When each STA receives a Trigger frame including information regarding OFDMA, in S404, the STA transmits a UL Data frame within the range of a data amount defined by the Length subfield 604 of the Trigger frame. At this time, in a case where information indicating that carrier sense is required to be executed is included, the STA executes the transmission in S404 after executing carrier sense. For example, the MFP 151 may transmit scan data in S404. Aside from this, information regarding consumables (for example, at least one of an ink remaining amount, a toner remaining amount, and a sheet remaining amount) may be transmitted in S404. Alternatively, information indicating the state of the MFP 151 (paper jam error occurred, cover opened, etc.) may be transmitted.

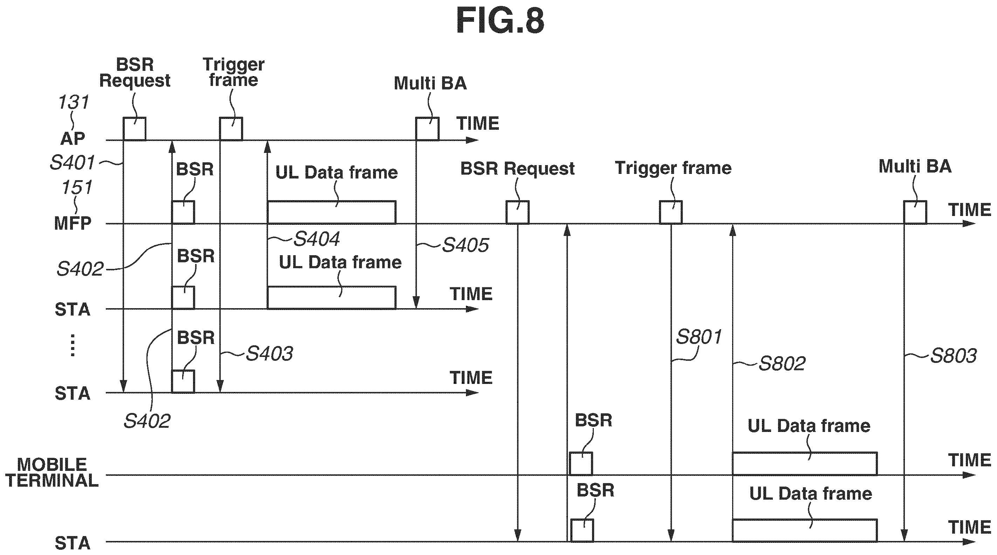

When the AP 131 receives a physical layer protocol data unit (PPDU) from each STA, in S405, the AP 131 transmits Multi Block Ack (Multi BA) as receipt acknowledgement. Next, an operation of the MFP 151 will be described with reference to Fig. 8. In the MFP 151, both of the infrastructure mode and the P2P mode are enabled in accordance with an instruction from the user. For example, the both modes are enabled by the user enabling the infrastructure mode using an operation panel of the MFP 151, and enabling the WFD mode. In P2P communication, the MFP 151 operates as a master station (for example, a group owner of WFD). In the P2P communication, P2P communication other than communication in the WFD mode may be executed. For example, communication in the software AP mode may be executed.

Here, the MFP 151 is assumed to have received a Trigger frame from the AP 131 in S403. In a case where both of infrastructure communication and P2P communication are enabled, the MFP 151 may refer to a communication channel to be used in the infrastructure communication, and construct a network as a master station in such a manner as to execute P2P communication in the same communication channel. Alternatively, in a case where both of infrastructure communication and P2P communication are enabled, the MFP 151 refers to a communication channel to be used in the infrastructure communication. Then, the MFP 151 may construct a network as a master station in such a manner as to execute P2P communication in a communication channel different from the communication channel to be used in the infrastructure communication. That is, in Fig. 8, the MFP 151 receives a Trigger frame from the external AP 131 in S403 while both of the infrastructure mode and the P2P mode are enabled.

Because the MFP 151 operates as a master station, in S801, the MFP 151 transmits a Trigger frame. Here, the MFP 151 divides one communication channel (for example, 20 MHz) into a plurality of resource units using a Trigger frame as described above with reference to Fig. 5, and allocates each resource unit to an STA including the mobile terminal 101. That is, the RU Allocation subfield 606 of the Trigger frame transmitted by the MFP 151 includes information regarding allocation of resource units. Here, the number of slave station apparatuses to which resource units are allocated by the MFP 151 becomes the maximum number of slave station apparatuses with which direct connection can be concurrently maintained. For example, in a case where the communication unit 156 can concurrently maintain P2P wireless connection with up to three slave station apparatuses, the maximum number of slave station apparatuses to which resource units are allocated becomes three. That is, the maximum number of apparatuses to which resource units are allocated that is designated in the Trigger frame transmitted in S801 is the same as the maximum number of slave stations that can be concurrently maintained in direct connection. In S802, the mobile terminal 101 transmits data to the MFP 151 (S802). Here, the mobile terminal 101 transmits data using a resource unit allocated based on the Trigger frame. For example, the mobile terminal 101 transmits a print job in S802. Alternatively, the mobile terminal 101 may transmit a status acquisition request of the MFP 151, or a remaining amount acquisition request of consumables (ink, toner, or sheet) in S802.

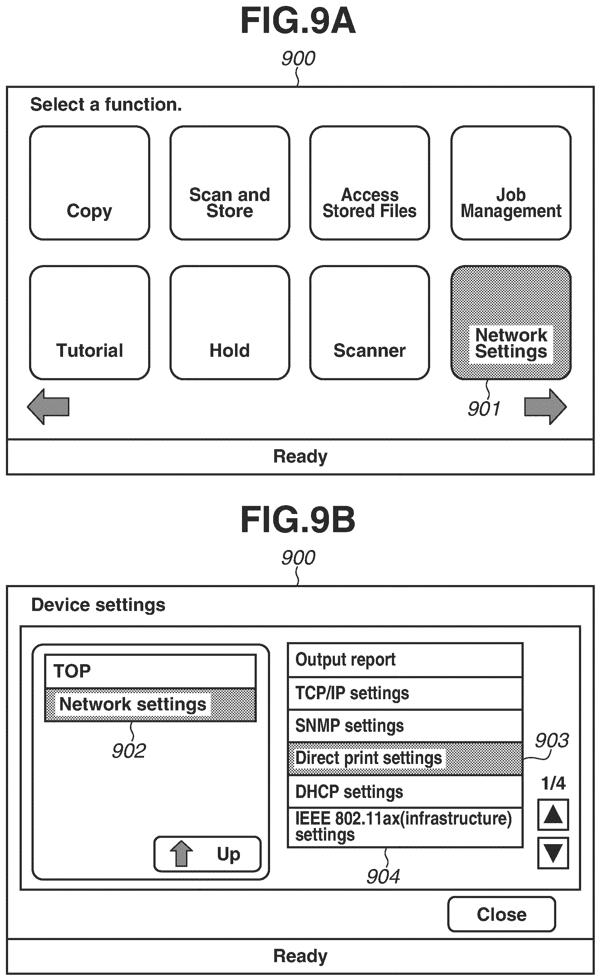

Figs. 9A to 9D are diagrams each illustrating an example of an operation screen 900 for making various mode settings of the infrastructure mode or direct wireless communication. First of all, by the user selecting network settings 901 in Fig. 9A, the screen illustrated in Fig. 9A transitions to the screen illustrated in Fig. 9B. In addition, the screens illustrated in Fig. 9A to 9D are displayed on the display unit 161.

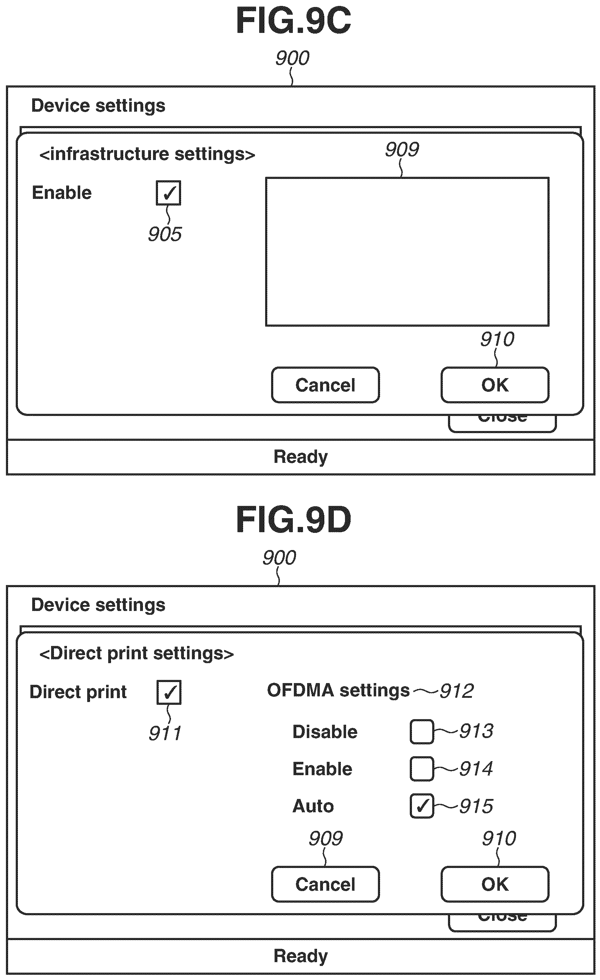

Fig. 9B illustrates a screen for making network settings. In a case where the user has selected infrastructure mode settings 904, the screen illustrated in Fig. 9C is displayed. Further, in a case where the user has selected direct print settings 903, the screen illustrated in Fig. 9D is displayed.

Fig. 9C illustrates a screen for performing setting processing in the infrastructure mode.

If the user ticks a checkbox 905, the infrastructure mode is enabled. The MFP 151 accordingly searches for a nearby access point and displays a list of SSIDs in a region 909. For example, by an SSID of the AP 131 being displayed in the region 909 and the SSID of the AP 131 being selected by the user from the region 909, wireless connection between the MFP 151 and the AP 131 in the infrastructure mode is established. In addition, in a case where the user desires to end the communication in the infrastructure mode, by the user unticking the checkbox 905 and pressing an OK button 910, an operation of the MFP 151 in the infrastructure mode is disabled. For example, wireless connection between the MFP 151 and the AP 131 in the infrastructure mode is disconnected.

In communication in the infrastructure mode, enabling/disabling of an OFDMA mode depends on the setting of the AP 131. More specifically, if the OFDMA mode is enabled in the AP 131, the MFP 151 executes communication in the infrastructure mode in accordance with the setting.

On the other hand, if the OFDMA mode is not enabled in the AP 131, the MFP 151 executes communication in the infrastructure mode in an orthogonal frequency division multiplexing (OFDM) mode in accordance with the setting.

Here, in order to fit a frequency band to be used in data transmission, into a narrow range, the OFDMA needs to use a complicated method in primary modulation processing. Further, when communication data obtained by the OFDMA is demodulated, the communication data needs to be demodulated using a complicated method. Accordingly, power consumption of a terminal apparatus tends to increase.

On the other hand, wireless communication by the OFDM is performed using a method different from the method described with reference to Fig. 8. More specifically, by a specific terminal occupying the entire band of a channel, communication processing is performed.

In the OFDM, because a specific terminal occupies the entire band of a channel, wireless communication with a plurality of STAs cannot be concurrently performed.

Nevertheless, because divisional use of a subchannel is unnecessary in the OFDM, the primary modulation processing can be performed using a simple method. Accordingly, when a terminal that has received a signal through OFDM communication demodulates the signal, unlike the OFDMA, complicated and a large amount of calculation is unnecessary, and power consumption of the terminal apparatus can be reduced.

As described above, both of the OFDMA and the OFDM have advantages and disadvantages. In order to utilize each advantage, it is necessary to determine these communication methods based on a use environment.

Here, in an environment where the AP 131 and the MFP 151 exist, in a case where the OFDMA is executed in both of the MFP 151 operating as a master station and the AP 131, a reduction in power consumption cannot be achieved. Thus, for example, in a case where the AP 131 executes the OFDMA in the infrastructure mode, the MFP 151 does not execute the OFDMA in a direct mode. With this configuration, in the infrastructure mode, an effect caused by the OFDMA is obtained, and power consumption in the direct mode is reduced. In contrast, in a case where the AP 131 does not execute the OFDMA in the infrastructure mode, the MFP 151 executes the OFDMA in the direct mode. With this configuration, power consumption in the infrastructure mode is reduced, and in the direct mode, an effect caused by the OFDMA is obtained. Consequently, in the environment where the AP 131 and the MFP 151 exist, it becomes possible to achieve a reduction in power consumption while maintaining convenience of communication.

The screen illustrated in Fig. 9D is displayed when the user has selected the direct print settings 903 in Fig. 9B.

By the user ticking a checkbox 911 of a direct print mode, the MFP 151 enables the direct mode. By enabling the direct mode, the MFP 151 operates as a master station in P2P communication. In other words, if P2P communication is WFD communication, the MFP 151 operates as a GO. Alternatively, if P2P communication is direct communication by a software AP, the MFP 151 operates as an AP.

OFDMA mode settings 912 are used by the communication unit 156 to set whether or not to enable the OFDMA mode in the direct mode. In a case where a checkbox 913 is ticked, direct communication is executed in a state in which the OFDMA is disabled. Alternatively, in a case where a checkbox 914 is ticked, direct communication is executed in a state in which the OFDMA is enabled.

Here, in a case where a checkbox 915 is ticked, the MFP 151 inspects an enabled state or a disabled state of the OFDMA in the infrastructure mode of the MFP 151, and determines enabling or disabling of PFDMA in the direct mode based on the inspection result.

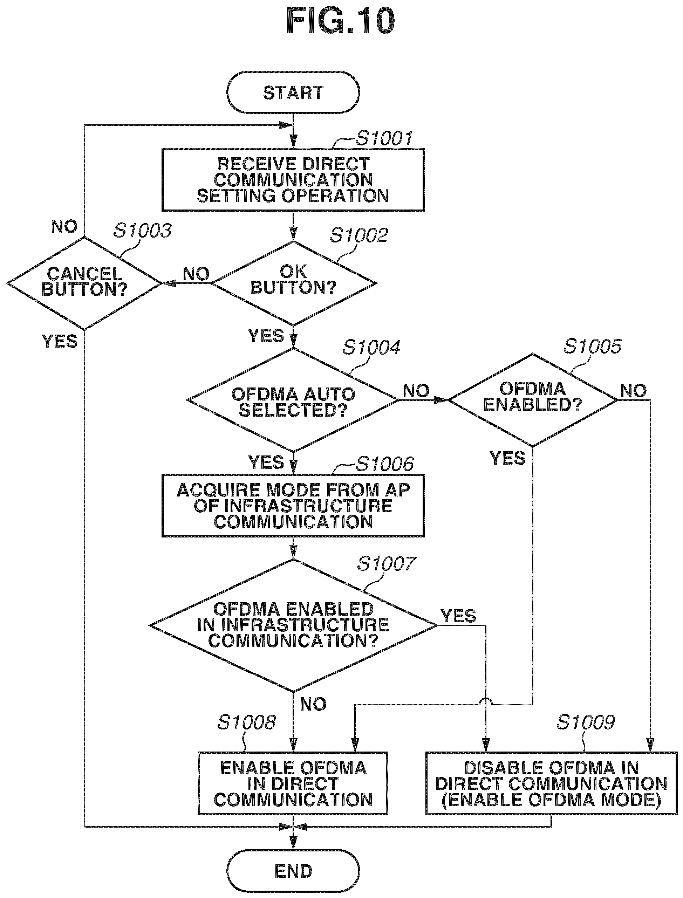

Fig. 10 is a diagram illustrating an operation flow in enabling or disabling the OFDMA in the direct mode of the MFP 151. The flow illustrated in Fig. 10 is implemented by the CPU 154 reading out each control program stored in the ROM 152 and executing the control program.

If an operation of the direct print settings is started, in step S1001, the CPU 154 receives various setting operations related to the direct print settings. Specifically, the CPU 154 receives various setting operations performed on the setting screen illustrated in Fig. 9D. In step S1002, the CPU 154 determines whether the OK button 910 has been selected. In a case where it is determined in step S1002 that the OK button 910 has been selected, the processing in Fig. 10 proceeds to step S1004 and subsequent steps. In a case where it is determined in step S1001 that the OK button 910 has not been selected, the processing proceeds to step S1003. In step S1003, the CPU 154 determines whether an operation performed in step S1001 is the selection of a cancel button. In a case where it is determined in step S1003 that the cancel button has not been selected, the processing returns to step S1001, and a setting operation is continued. In a case where it is determined in step S1003 that the cancel button has been selected, a setting operation by this flow is ended.

In step S1004, the CPU 154 determines whether the checkbox 915 has been selected. In a case where it is determined in step S1004 that the checkbox 915 has been selected, in step S1006, the CPU 154 acquires the state of the OFDMA mode in the infrastructure mode.

In a case where it is determined in step S1007 that the OFDMA is enabled in the infrastructure mode, in step S1009, the CPU 154 operates the OFDMA in a disabled state in the direct mode. In a case where the CPU 154 operates the MFP 151 as a master station of the direct mode, the CPU 154 controls the communication unit 156 to operate as a master station in a state of executing the OFDM.

In a case where it is determined in step S1007 that the OFDMA is not enabled in the infrastructure mode, in step S1008, the CPU 154 operates the OFDMA in an enabled state in the direct mode. In a case where the CPU 154 operates the MFP 151 as a master station of the direct mode, the CPU 154 controls the communication unit 156 to operate as a master station in a state of executing the OFDMA.

In a case where it is determined in step S1004 that the checkbox 915 has not been selected, in step S1005, the CPU 154 determines whether the checkbox 914 is enabled. In a case where it is determined in step S1005 that the checkbox 914 has been selected, the CPU 154 executes the above-described processing in step S1008.

Alternatively, in a case where it is determined in step S1005 that the checkbox 914 has not been selected, the CPU 154 executes the above-described processing in step S1009.

Through the above-described processing, the MFP 151 can execute communication processing in the direct mode based on the settings made on the screen illustrated in Fig. 9D.

Further, even in a case where OFDMA compliant with an IEEE 802.11 standard is enabled in the infrastructure mode, the CPU 154 can control the MFP 151 in such a manner that OFDMA compliant with an IEEE 802.11 standard is not executed in wireless communication of the direct mode, based on the enabling of the direct mode.

### [Second Exemplary Embodiment]

In the present exemplary embodiment, processing of setting enabling or disabling of OFDMA in the direct mode at a timing different from that in the first exemplary embodiment will be described.

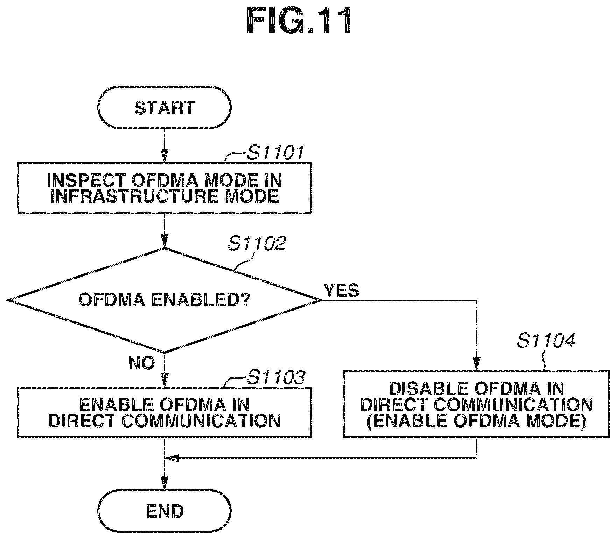

Fig. 11 is a flowchart related to processing of setting enabling or disabling the OFDMA in the direct mode according to the present exemplary embodiment. The flow illustrated in Fig. 11 is implemented by the CPU 154 reading out each control program stored in the ROM 152 and executing the control program. In addition, the flowchart illustrated in Fig. 11 is started in a case where a connection request for direct connection is issued from a terminal to the MFP 151.

In step S1101, the CPU 154 inspects the setting of the OFDMA mode in the infrastructure mode, and in step S1102, the CPU 154 determines whether the OFDMA is in an enabled state or a disabled state. The CPU 154 can implement the processing in step S1102 by referring to RU Allocation in a Trigger frame in Fig. 6 that is transmitted from an AP.

In a case where it is determined in step S1102 that the OFDMA is disabled in the infrastructure mode, in step S1103, the CPU 154 starts communication in the direct mode in a state in which the OFDMA is enabled.

In a case where it is determined in step S1102 that the OFDMA is enabled in the infrastructure mode, in step S1104, the CPU 154 starts communication in the direct mode in a state in which the OFDMA is disabled.

According to the present exemplary embodiment, because the state of the infrastructure mode is checked when a direct connection request is issued to the MFP 151, communication that reflects a latest state in the infrastructure mode can be performed.

### [Other Exemplary Embodiments]

In the above-described exemplary embodiments, a case where the MFP 151 establishes wireless connection in the infrastructure mode and then the direct mode is enabled has been described, but an enabling timing is not limited to this. More specifically, the direct mode may be enabled before the MFP 151 establishes wireless connection in the infrastructure mode. In this case, the MFP 151 determines the enabling or disabling of OFDMA in the direct mode based on the setting of the checkbox 913 or 914 in Fig. 9D.

In the above-described exemplary embodiments, the enabling or disabling of OFDMA in the infrastructure mode is determined using a Trigger frame transmitted from the AP 131, but the configuration is not limited to this. For example, the MFP 151 may receive information regarding enabling or disabling of OFDMA of the AP 131, via wired connection with the AP 131.

Further, the CPU 154 may control the MFP 151 in such a manner that OFDMA compliant with an IEEE 802.11 standard is not executed in wireless communication of the direct mode irrespective of the settings made on the setting screens as illustrated in Figs. 9A to 9D. In other words, even in a case where OFDMA compliant with an IEEE 802.11 standard is enabled in the infrastructure mode, the CPU 154 may control the MFP 151 in such a manner that OFDMA compliant with an IEEE 802.11 standard is not executed in wireless communication of the direct mode, based on the enabling of the direct mode.

The present exemplary embodiment can also be implemented by processing of supplying a program implementing one or more functions of the above-described exemplary embodiments, to a system or an apparatus via a network or a storage medium, and one or more processors in a computer of the system or the apparatus reading out and executing the program. Further, the present exemplary embodiment can also be implemented by a circuit (for example, application specific integrated circuit (ASIC)) implementing one or more functions.

The disclosure of the present exemplary embodiment includes the following configurations, method, and program.

### (Configuration 1)

An image forming apparatus including:
first setting means for enabling a first mode in which wireless communication is executed via an external access point provided on an outside of the image forming apparatus;
second setting means for enabling a second mode in which wireless communication is executed not via an external access point provided on the outside of the image forming apparatus;
receiving means for receiving a first trigger frame including information regarding orthogonal frequency division multiple access (OFDMA) compliant with an Institute of Electrical and Electronics Engineers (IEEE) 802.11 standard, from an external access point provided on the outside of the image forming apparatus, while the first mode is enabled;
communication means for executing communication processing in the first mode by the OFDMA compliant with the IEEE802.11 standard, based on the information regarding the first trigger frame;
control means for controlling the image forming apparatus in such a manner that the OFDMA compliant with the IEEE802.11 standard is not executed in wireless communication of the second mode, based on the second mode being enabled, even in a case where the OFDMA compliant with the IEEE802.11 standard is enabled in the first mode; and
print processing means for executing print processing on a sheet based on a print job received by wireless communication via the first mode or wireless communication via the second mode.

### (Configuration 2)

The image forming apparatus according to Claim 1, further including third setting means configured to receive a setting as to whether to execute the OFDMA in wireless communication of the second mode, via an operation panel of the image forming apparatus.

### (Configuration 3)

The image forming apparatus according to Claim 1 or 2, wherein the communication means transmits a remaining amount of a consumable of the image forming apparatus or information indicating a state of the image forming apparatus, based on the OFDMA compliant with the IEEE 802.11 standard.

### (Configuration 4)

The image forming apparatus according to Claim 3,
wherein the remaining amount of the consumable is at least one of a remaining amount of ink, a remaining amount of toner, and a remaining amount of sheets, and
wherein information indicating a state of the image forming apparatus is at least one of a paper jam error and cover open.

### (Configuration 5)

The image forming apparatus according to any one of Claims 1 to 4, further including disabling means for disabling the OFDMA in wireless communication of the second mode, based on the OFDMA being enabled in wireless communication of the first mode.

### (Configuration 6)

The image forming apparatus according to Claim 5, wherein the disabling means disables the OFDMA in wireless communication of the second mode based on information regarding the OFDMA that is included in a trigger frame transmitted from the external access point.

### (Configuration 7)

The image forming apparatus according to Claim 5 or 6, further including determination means for determining whether the OFDMA is enabled in wireless communication of the first mode, based on the second mode being enabled,
wherein, in a case where it is determined that the OFDMA is enabled in wireless communication of the first mode, the enabling means disables the OFDMA in wireless communication of the second mode.

### (Configuration 8)

The image forming apparatus according to any one of Claims 5 to 7, further including determination means for determining whether the OFDMA is enabled in wireless communication of the first mode, based on a request for connection to the image forming apparatus in wireless connection of the second mode being received,
wherein, in a case where it is determined that the OFDMA is enabled in wireless communication of the first mode, the disabling means disables the OFDMA in wireless communication of the second mode.

### (Configuration 9)

The image forming apparatus according to any one of Claims 1 to 8, wherein, in a case where the second mode is enabled, the image forming apparatus determines a communication channel to be used in wireless communication of the second mode.

### (Configuration 10)

The image forming apparatus according to any one of Claims 1 to 9, wherein the first mode is an infrastructure mode and the second mode is a software access point (AP) mode.

The present invention is not limited to the above-described exemplary embodiments, and various changes and modifications can be made without departing from the spirit and the scope of the present invention. Accordingly, the following claims are appended to publicize the scope of the present invention.

This application is based upon and claims the benefit of priority from Japanese Patent Application No. 2022-117402, filed July 22, 2022, the entire contents of which are incorporated herein by reference.

### Reference Signs List

- 151: MFP

## Claims

1. An image forming apparatus comprising:
first setting means for enabling a first mode in which wireless communication is executed via an external access point provided on an outside of the image forming apparatus;
second setting means for enabling a second mode in which wireless communication is executed not via an external access point provided on the outside of the image forming apparatus;
receiving means for receiving a first trigger frame including information regarding orthogonal frequency division multiple access (OFDMA) compliant with an Institute of Electrical and Electronics Engineers (IEEE) 802.11 standard, from an external access point provided on the outside of the image forming apparatus, while the first mode is enabled;
communication means for executing communication processing in the first mode by the OFDMA compliant with the IEEE802.11 standard, based on the information regarding the first trigger frame;
control means for controlling the image forming apparatus in such a manner that the OFDMA compliant with the IEEE802.11 standard is not executed in wireless communication of the second mode, based on the second mode being enabled, even in a case where the OFDMA compliant with the IEEE802.11 standard is enabled in the first mode; and
print processing means for executing print processing on a sheet based on a print job received by wireless communication via the first mode or wireless communication via the second mode.

2. The image forming apparatus according to Claim 1, further comprising third setting means configured to receive a setting as to whether to execute the OFDMA in wireless communication in the second mode, via an operation panel of the image forming apparatus.

3. The image forming apparatus according to Claim 1, wherein the communication means transmits a remaining amount of a consumable of the image forming apparatus or information indicating a state of the image forming apparatus, based on the OFDMA compliant with the IEEE 802.11 standard.

4. The image forming apparatus according to Claim 3,
wherein the remaining amount of the consumable is at least one of a remaining amount of ink, a remaining amount of toner, and a remaining amount of sheets, and
wherein information indicating a state of the image forming apparatus is at least one of a paper jam error and cover open.

5. The image forming apparatus according to Claim 1, further comprising disabling means for disabling the OFDMA in wireless communication of the second mode, based on the OFDMA being enabled in wireless communication of the first mode.

6. The image forming apparatus according to Claim 5, wherein the disabling means disables the OFDMA in wireless communication of the second mode based on information regarding the OFDMA that is included in a trigger frame transmitted from the external access point.

7. The image forming apparatus according to Claim 5, further comprising determination means for determining whether the OFDMA is enabled in wireless communication of the first mode, based on the second mode being enabled,
wherein, in a case where it is determined that the OFDMA is enabled in wireless communication of the first mode, the enabling means disables the OFDMA in wireless communication of the second mode.

8. The image forming apparatus according to Claim 5, further comprising determination means for determining whether the OFDMA is enabled in wireless communication of the first mode, based on a request for connection to the image forming apparatus in wireless connection of the second mode being received,
wherein, in a case where it is determined that the OFDMA is enabled in wireless communication of the first mode, the disabling means disables the OFDMA in wireless communication of the second mode.

9. The image forming apparatus according to Claim 1, wherein, in a case where the second mode is enabled, the image forming apparatus determines a communication channel to be used in wireless communication of the second mode.

10. The image forming apparatus according to Claim 1, wherein the first mode is an infrastructure mode and the second mode is a software access point (AP) mode.
